# EUROPEAN PATENT SPECIFICATION

(11) **EP 2 313 545 B1**
(45) Date of publication and mention of the grant of the patent: **08.04.2015**
(21) Application number: 09791444.4
(22) Date of filing: 13.08.2009
(51) Int. Cl.: C08K 7/02, D21H 27/00, D04H 1/04, D04H 1/44, D04H 1/46

(54) **NONWOVEN WEBS WITH VISIBLE COMPRESSED SITES**
VLIESSTOFFE MIT SICHTBAREN GEPRESSTEN STELLEN
NON-TISSES COMPRENANT DES SITES COMPRIMES VISIBLES

(30) Priority: 15.08.2008 US 89062 P
(43) Date of publication of application: 27.04.2011
(73) Proprietor: The Procter & Gamble Company, Cincinnati, OH 45202 (US)
(72) Inventor: BRENNAN, Jonathan, Paul, Sharonville OH 45241 (US); CARRIER, Michael, Edward, Green Township OH 45247 (US)
(74) Representative: Kremer, Véronique Marie Joséphine
(86) International application number: PCT/US2009/053630
(87) International publication number: WO 2010/019726

(56) References cited:
- US-A1- 2006 037 724
- US-A1- 2006 134 386

## Description

### FIELD OF INVENTION

The present invention relates to nonwoven webs comprising visible compressed sites and more particularly to disposable pre-moistened nonwoven webs comprising non-thermoplastic fibers exhibiting a fiber length of less than about 15 mm and one or more compressed sites comprising the non-thermoplastic fibers, wherein at least one of the one or more compressed sites is visible when wet, wipes comprising such nonwoven webs and methods for making such nonwoven webs.

### BACKGROUND OF INVENTION

Consumers of disposable pre-moistened nonwoven wipes, particularly toilet wipes, desire a soft, cloth-like wipe that is economical. Consumers react to visual and tactile properties in their assessment of wipes. Thus the presence of cloth-like texture on a pre-moistened nonwoven wipe can signal to a consumer that a wipe has the properties of cloth.

Disposable pre-moistened wipes are typically made of nonwoven webs. A variety of methods are known in the art for providing nonwoven webs with cloth-like texture. However, in order for the texture to be visible when a web is pre-moistened, the methods may require physical or chemical binding of the fibers that make up the web. For example, visible texture may be applied to a non-woven web comprising thermoplastic fibers via thermal calender-bonding. In this process, adjacent thermoplastic fibers are compressed and melt-bonded together. In a further example, an adhesive may be applied to the fibers. For instance, The Procter & Gamble Company of Cincinnati, OH markets Pampers^{®} baby wipes in North America, which comprise nonwoven substrates manufactured via the carded spunlaced process that includes the imprinting of thermal calender embossed designs. In another example, a resin may hold embossed regions together when wet, such as in the 100% cellulosic fiber Bounty^{®} Paper Towels, also marketed by The Procter & Gamble Company.

The use of additives, such as chemicals, binders, resins and the like, may add to the cost of producing pre-moistened nonwoven wipes. Likewise, the increasing price of petroleum-based products such as thermoplastic fibers, may add to the cost.

In addition to the foregoing, nonwoven webs comprising compressed sites comprising non-thermoplastic fibers having a fiber length of more than 18 mm have been made. Such nonwoven webs still exhibit negatives with regard to dispersibility and/or flushability due to the relatively long non-thermoplastic fibers that tend to foul pumps within plumbing.

Accordingly, there is a need for a textured, soft, cloth-like wipe comprising a nonwoven web that is economical and overcomes the negatives of nonwoven webs comprising non-thermoplastic fibers exhibiting longer lengths wherein the nonwoven web withstands being wetted without using chemicals, binders, resins and the like to maintain the texture. Moreover, it would be desirable to provide a method for doing so.

### SUMMARY OF INVENTION

The present invention fulfills the needs described above by providing a pre-moistened nonwoven web comprising non-thermoplastic fibers having a fiber length of less than about 15 mm and one or more compressed sites comprising at least a portion of one or more of the non-thermoplastic fibers, wherein at least one of the one or more compressed sites is visible when wet, wipes comprising such nonwoven webs and methods for making such nonwoven webs.

In one example of the present invention, a nonwoven web comprising non-thermoplastic fibers having a fiber length of less than about 15 mm and from 0% to less than about 5% by weight of the nonwoven web on a dry fiber basis of thermoplastic fibers, wherein the nonwoven web exhibits one or more compressed sites comprising at least a portion of one or more of the non-thermoplastic fibers, wherein at least one of the one or more compressed sites is visible when wet, is provided.

In another example of the present invention, a method of making a nonwoven web that has at least one compressed site that is visible when wet, wherein the method comprises the steps of: providing at least one nonwoven web comprising non-thermoplastic fibers having a fiber length of from about 3 mm to less than about 15 mm and from 0% to less than about 5% by weight of the nonwoven web on a dry fiber basis of thermoplastic fibers, and a surface; applying a compressive stress of at least about 67 Newtons per square millimeter (N/mm²) to the nonwoven web to create at least one compressed site on the surface of the nonwoven web wherein the at least one compressed site comprises at least a portion of one or more of the non-thermoplastic fibers and wherein at least one of the compressed sites are visible when wet, is provided. The method may further comprise the step of applying a liquid composition to the nonwoven web to produce a pre-moistened nonwoven web, is provided.

In even another example of the present invention, a pre-moistened wipe comprising a wetlaid spunlaced web comprising non-thermoplastic fibers having a fiber length of from about 3 mm to less than about 15 mm and a surface, wherein the surface comprises one or more compressed sites, wherein at least one of the compressed sites is visible when wet, is provided.

In yet another example of the present invention, a pre-moistened wipe comprising an airlaid spunlaced web comprising non-thermoplastic fibers having a fiber length of from about 3 mm to less than about 15 mm and a surface, wherein the surface comprises one or more compressed sites, wherein at least one of the compressed sites is visible when wet, is provided.

In still another example of the present invention, a nonwoven web comprising non-thermoplastic fibers having a fiber length of less than about 15 mm and thermoplastic fibers, wherein the nonwoven web exhibits one or more compressed sites comprising at least a portion of one or more of the non-thermoplastic fibers and wherein one or more of the compressed sites are void of thermoplastic fibers, is provided.

In yet another example of the present invention, a wipe, for example a pre-moistened and/or lotion-containing wipe, comprising one or more nonwoven webs according to the present invention, is provided.

Accordingly, the present invention provides nonwoven webs comprising non-thermoplastic fibers having a length of less than 15 mm and/or from about 3 mm to about 15 mm, methods for making same and pre-moistened wipes containing same.

### BRIEF DESCRIPTION OF DRAWINGS

The features, aspects and advantages of the present invention will become better understood with reference to the following description, appended claims and accompanying drawings where:
Fig. 1 is a view of an example of a pattern of compressed sites according to the present invention; and
Fig. 2 is a photograph of a portion of a pre-moistened nonwoven web according to the present invention with the pattern of compressed sites shown in Fig. 1.

### DETAILED DESCRIPTION OF INVENTION

### Definitions

"Fiber" as used herein, refers to the unit which forms the basic element of the web disclosed herein.

"Nonwoven web" or "web" are used interchangeably herein, and refer to a layer or layers of fibers that are laid and bonded via nonwoven manufacturing processes known in the art.

"Wipe" as used herein refers to an article that is comprised of one or more nonwoven webs.

"Non-thermoplastic fiber" as used herein, refers to a fiber that does not act as a thermoplastic fiber which softens or melts upon exposure to heat and returns to its original state when cooled to room temperature. Nonlimiting examples of non-thermoplastic fibers include regenerated cellulose, such as rayon, which in turn includes but is not limited to fibrillated rayon, viscose, lyocell and mixtures thereof; pulp; cotton; wool; silk; jute; linen; ramie; hemp; flax; camel hair; kenaf; starch; starch derivatives; chitosan; chitosan derivative; hemicellulose; hemicellulose derivative; gum; arabinan; galactan; protein fibers and mixtures thereof.

"Fiber length" as used herein, is the length of an individual fiber as measured prior to any fiber laying and/or bonding processes used to make a nonwoven web of the present invention comprising the fiber. For example, prior to making a nonwoven web the lengths of fibers used to make the nonwoven web are known to those making the nonwoven web, especially if the fibers are commercially available fibers. If for some reason the lengths of the fibers are not known, then the length of a fiber is obtained by measuring along the longest axis of the fiber from one terminus to the other terminus of the fiber. If a fiber has a kink, curl or curves in it, then the length is the length along the entire path of the fiber from one terminus to the other terminus. The length of a fiber within a nonwoven web and/or wipe may be measured by 1) removing the fiber from the nonwoven web and/or wipe, such as by dispersing the non-thermoplastic fibers of the nonwoven web in a fluid, for example, a liquid or gas; and/or 2) if a terminus of the non-thermoplastic fiber is present in a compressed site of a nonwoven web and is not discernible, then measuring from a free terminus of the non-thermoplastic fiber, if any, to a point along the non-thermoplastic fiber that is immediately adjacent to the compressed site.

Nonlimiting examples of lengths of the non-thermoplastic fibers include fibers having a fiber length of less than about 15 mm and/or less than about 14 mm and/or less than about 12 mm and/or less than about 10 mm and/or less than about 8 mm and/or greater than about 1 mm and/or greater than about 2 mm and/or greater than about 4 mm and/or greater than about 6 mm. In one example, the non-pulp non-thermoplastic fibers of the present invention exhibit a fiber length of from about 6 mm to less than about 15 mm. In another example, pulp non-thermoplastic fibers exhibit a fiber length of less than about 6 mm to greater than about 1mm. The fibers may have an average fiber decitex (dtex) of at least about 0.8 dtex, at least about 1 dtex, at least about 1.2 dtex, or even at least about 1.5 dtex. The fibers may have an average decitex of less than about 8 dtex, less than about 5 dtex, or even less than about 2 dtex.

"Thermoplastic fiber" as used herein, refers to a fiber that softens or melts upon exposure to heat and returns to its original state when cooled to room temperature. Non-limiting examples of thermoplastic fibers include polypropylene and copolymers of polypropylene; polyethylene and copolymers of polyethylene; polyamide and copolymers of polyamide; polyester and copolymers of polyester; aliphatic polyesteramide; lactic acid polymer; lactide polymer; polyhydroxyalkanoate fibers; and mixtures thereof and bicomponent fibers, especially core and sheath fibers comprising such polymers and/or copolymers and mixtures thereof.

"Surface" as used herein, refers to a two-dimensional external or superficial layer of a nonwoven web or wipe.

"Compressive stress" as used herein, refers to the blunt force which, when applied to a web, produces a "compressed site". Compressive stress may not include shear force, which when applied to a nonwoven web, cuts the fibers comprising the nonwoven web. Compressive stress is measured in units of Newtons per square millimeter (N/mm²).

"Compressed site" as used herein, refers to an area of the nonwoven web in which the fibers comprising the nonwoven web are pressed together such that fibers are brought closer together in space as compared to the fibers that are located in the uncompressed regions. A compressed site may have a higher fiber density as compared to the uncompressed regions.

"Un-melted fibers" as used herein, refers to the fibers in the compressed sites, which are compressed by a blunt force to form a functional solid material in which there is no softening or melting of the fibers and consequently no bonding between the fibers, i.e. no mixing between the fibers on the molecular level. Therefore, if one could seize and pull on a single fiber in a compressed site, it would separate from other fibers in the compressed site.

"Uncompressed regions" as used herein, refers to those areas of the nonwoven web that do not contain a compressed site. The fibers comprising the uncompressed regions of the nonwoven web may remain in a substantially unaltered form after the nonwoven web is subjected to compressive stress.

"Visible" as used herein, refers to being capable of being seen by the naked eye when viewed at a distance of 12 inches (in), or 30.48 centimeters (cm), under the unimpeded light of an ordinary incandescent 60 watt light bulb that is inserted in a fixture such as a table lamp.

"Liquid composition" as used herein, refers to any liquid, including, but not limited to a pure liquid such as water, a colloid, an emulsion, a suspension, a solution, a lotion and mixtures thereof. The term "aqueous solution" as used herein, refers to a solution that is at least about 20%, at least about 40%, or even at least about 50 % water by weight, and at most about 95% water by weight, about 90% water by weight, or even at most about 80% water by weight.

"Pre-moistened" as used herein may refer to a nonwoven web or wipe which is wetted, or is comprised of a portion that is wetted, with a liquid composition prior to use by the consumer. "Pre-moistened" may also refer to nonwoven webs or wipes that are wetted with a liquid composition prior to packaging, such as in a generally moisture impervious container or wrapper. Such pre-moistened wipes, which may also be referred to as "wet wipes", "toilet wipes" and "towelettes", may be suitable for use in cleaning tasks related babies, children and adults. Such wipes may also be suitable for use in the application of substances to the body, including but not limited to make-up, skin conditioners, ointments, medications and combinations thereof. Such wipes may also be of use for the cleaning or grooming of pets, or for the general cleansing of surfaces and objects, such as household kitchen and bathroom surfaces, eyeglasses, exercise and athletic equipment, automotive surfaces and the like.

"Prints" as used herein refers to any ink or polymer that is added to the surface of a nonwoven web or wipe to provide aesthetic appeal. Prints may take any form including, but not limited to, indicia, figures, patterns, letters, pictures, words, phrases and combinations thereof.

"Binder" as used herein, refers to any compound added to a nonwoven web that may improve the strength of the nonwoven web by binding its constituent fibers together, i.e., via chemical bonding. Some binders may disassociate from the nonwoven web when subjected to the conditions encountered by the nonwoven web during or after disposal. Such conditions may include, but are not limited to, large amounts of water, particular pHs, water with particular ion concentrations and combinations thereof. When the nonwoven web comprising the binder is exposed to particular conditions, the binder may dissolve, for example. When the binder dissolves, the strength of the nonwoven web may decrease and in turn the dispersibility of the web may increase. Binders, for example, may be water soluble, water-swellable and combinations thereof. Polyvinyl alcohol (PVOH) and EP919, which is a flushable, dispersible binder sold by Air Products of Allentown, Pennsylvania, USA, are non-limiting examples of binders. Further examples of binders may include, but are not limited to, sulfonic-acid modified PVOH, carboxylic-acid modified PVOH, and binders comprising at least one compound selected from the group consisting of a water-soluble organic salt, a water-soluble inorganic salt and a boron compound. A further non-limiting example of a binder may include water-insoluble or water-swellable carboxymethylcellulose. The solubility of carboxymethylcellulose may depend on its degree of etherification and pH, among other factors.

"Water soluble" as used herein, refers to a component that is soluble or otherwise dispersible (such as to provide a micellar solution) in water at a level of at least about 0.25 percent by weight at about 25°C.

When used herein in relation to material compositions, the terms "%", "percent", "weight percent" or "percent by weight" refer to the quantity by weight of a component as a percentage of the total weight, unless otherwise indicated.

As used herein with respect to webs, the term "machine-direction" or "MD" refers to the direction of nonwoven web travel as the nonwoven web is produced, for example on commercial nonwoven production equipment. Likewise, the term "cross-direction" or "CD" refers to the direction perpendicular to the machine direction and parallel to the general plane of the layered fibrous product and/or layered fibrous structure. With respect to individual wipes, the terms refer to the corresponding directions of the wipe with respect to the nonwoven web used to produce the wipe. These directions are carefully distinguished herein, because the mechanical properties of a nonwoven web may differ depending on how the nonwoven web is oriented during testing. For example, tensile properties of a nonwoven web may differ between the machine-direction and the cross-direction, due to the orientation of the constituent fibers, and other process-related factors.

"Comprising" or "comprised of" as used herein, refers to the various components, ingredients or steps that may be conjointly employed in practicing the present invention. Accordingly, the terms "comprising" or "comprised of" may encompass the more restrictive terms "consisting essentially of" and "consisting of".

"Surfactant" as used herein, refers to materials which may preferably orient toward an interface. Classes of surfactants may include, but are not limited to: nonionic surfactants, anionic surfactants, cationic surfactants, amphoteric surfactants, zwitterionic surfactants and mixtures thereof.

"Emulsifier" and "solubilizer" may be interchangeably used herein, and refer to components that may reduce the tendency of one or more other components in a lotion composition to phase separate from the lotion.

"Co-surfactant" as used herein, refers to a component that may act as either a surfactant or an emulsifier/solubilizer.

"Organic water soluble polymer" as used herein, refers to an organic compound formed by the joining of smaller molecules, referred to as monomers. The term may be used to refer either to a macromolecule made up of a large number of monomers linked by covalent bonds, e.g., polypeptides, nucleic acids, polysaccharides, and plastics, or to a protein made up of several subunits linked by covalent or no covalent bonds, e.g., hemoglobin or IBM immunoglobulin.

"Wetlaid nonwoven web" or "Wetlaid web" as used herein refers to a web that has been made by depositing an aqueous slurry of fibers onto a forming wire, belt and/or fabric.

"Airlaid nonwoven web" or "Airlaid web" as used herein refers to a web that has been made by combining dry fibers together onto a forming belt and/or fabric.

"Spunlaced nonwoven web" or "Spunlaced web" as used herein refers to a web that has been

### Nonwoven Web

The nonwoven webs of the present invention may be made via fiber laying and fiber bonding processes known in the art. Fiber laying processes suitable for use in making the nonwoven webs of the present invention include, but are not limited to, spunlaying, meltblowing, carding, airlaying, wetlaying and combinations thereof. Fiber bonding steps suitable for use include, but are not limited to, spunlacing (i.e. hydroentanglement), cold calendering, hot calendering, air thru bonding, chemical bonding, needle punching and combinations thereof. In one example, the nonwoven webs of the present invention are made by wetlaying and spunlacing non-thermoplastic fibers and thermoplastic fibers.

In one example of the present invention, a nonwoven web of the present invention comprises greater than about 95% to 100% by weight of the nonwoven web on a dry fiber basis of non-thermoplastic fibers. The non-thermoplastic fibers may comprise from about 0% to 100% by weight on a dry fiber basis of regenerated cellulose fibers (i.e., rayon and lyocell fibers) and from about 0% to about 100% by weight on a dry fiber basis of pulp fibers (i.e., Northern Softwood Kraft (NSK) pulp fibers, Southern Softwood Kraft (SSK) pulp fibers, Eucalyptus pulp fibers and mixtures thereof).

In another example, the non-thermoplastic fibers within a nonwoven web of the present invention comprise from about 0% to about 60% and/or from about 10% to about 50% and/or from about 20% to about 40% by weight on a dry fiber basis of regenerated cellulose fibers (i.e., rayon and lyocell fibers) and from about 40% to about 100% and/or from about 50% to about 90% and/or from about 60% to about 80% by weight on a dry fiber basis of pulp fibers (i.e., NSK pulp fibers, SSK pulp fibers, Eucalyptus pulp fibers and mixtures thereof).

In another example of the present invention, the nonwoven web comprises at least about 20% and/or at least about 40% and/or at least about 60% and/or at least about 80% and/or at least about 90% and/or at least about 95% to about 100% by weight of the nonwoven web on a dry fiber basis of non-thermoplastic fibers having a fiber length of less than about 15 mm and/or from about 3 mm to less than about 15 mm..

In yet another example of the present invention, the nonwoven web comprises at least about 5% and/or at least about 10% and/or at least about 20% and/or at least about 40% and/or at least about 50% to about 100% and/or to about 90% and/or to about 80% and/or to about 70% and/or to about 60% by weight of the nonwoven web on a dry fiber basis of non-thermoplastic fibers have a fiber length of from about 3 mm to less than about 15 mm.

In another example of the present invention, the nonwoven web comprises from greater than about 95% to less than about 100% by weight of the nonwoven web on a dry fiber basis of non-thermoplastic fibers and from 0% to less than about 5% and/or from about 1% to less than about 5% and/or from 1% to about 3% by weight of the nonwoven web on a dry fiber basis of thermoplastic fibers. In yet another example of the present invention, the nonwoven web comprises compressed sites that are void of thermoplastic fibers.

In even another example of the present invention, the nonwoven web comprises from 0% and/or greater than about 5% and/or greater than about 10% and/or greater than about 15% and/or less than about 30% and/or less than about 25% and/or less than about 20% by weight of the nonwoven web on a dry fiber basis of non-thermoplastic fibers having a fiber length of greater than 15 mm and/or greater than about 16 mm and/or greater than about 18 mm.

In one example, the nonwoven webs of the present invention comprise, in addition to the non-thermoplastic fibers, greater than 0% and/or greater than 0.5% and/or greater than 1% and/or to less than about 5% and/or less than about 3% and/or less than about 2% by weight of the nonwoven web on a dry fiber basis of thermoplastic fibers. It is believed that the presence of more than about 5% by weight on a dry fiber basis of thermoplastic fibers in a nonwoven web affects the formation of the compressed sites. Without wishing to be bound by theory, it is believed that once the amount of thermoplastic fibers in a nonwoven web is increased to above 5.5%, there are sufficient numbers of thermoplastic fibers randomly distributed throughout the web such that when the compressed sites are made, the associated softening and/or melting of the thermoplastic fibers (particularly if heat is conjointly applied with the compressive stress) may cause melt-bonding between adjacent thermoplastic fibers. The melt-bonding of thermoplastic fibers is commonly known in the art as a method for providing nonwoven webs with visible texture that withstands moistening. Therefore, a thermoplastic fiber content of above 5.5% by weight on a dry fiber basis would bring a nonwoven web outside of the scope of the present invention.

The low amount of thermoplastic fibers may provide benefits that are unrelated to the formation of the compressed sites and their enduring visibility when moistened. Such benefits may include, but are not limited to, dust control, softness, and combinations thereof. Without wishing to be bound by theory, it is believed that the low amount of thermoplastic fibers make the likelihood of the thermoplastic fibers being present in the compressed sites of the nonwoven webs almost nonexistent, if not totally nonexistent.

In one example of the present invention, the nonwoven web comprises non-thermoplastic fibers having a fiber length of less than about 15 mm, wherein the non-thermoplastic fibers comprise about 20% by weight on a dry fiber basis of rayon fibers and about 78.5% by weight on a dry fiber basis of pulp fibers and thermoplastic fibers comprising about 1.5% by weight on a dry fiber basis of polyethylene/polypropylene bicomponent fibers.

In one example, the nonwoven web of the present invention is a wetlaid spunlaced nonwoven web and/or an airlaid spunlaced nonwoven web. Nonlimiting examples of suitable nonwoven webs for use in the present invention are available from Ahlstrom Corporation, Windsor Locks, CT, for example, Ahlstrom Grade 10539 nonwoven substrate.

The nonwoven webs of the present invention may further comprise less than about 10% by weight of a binder. Such a low amount of binder may provide benefits that are unrelated to the formation of the compressed sites and the visibility of the sites when moistened. Binder may be added as what is known in the art as a "dusting layer". A dusting layer is a small amount of binder that is added to fibers during the fiber laying process so that the fibers will slightly adhere and not fly off the forming surface. The nonwoven web comprises less than about 0.5% by weight of a binder. In some examples of the present invention, the nonwoven webs may comprise 0% binder.

The nonwoven webs of the present invention may exhibit basis weights ranging from about 5 to about 200 grams per square meter (gsm), from about 10 to about 175 gsm, from about 30 to about 150 gsm, from about 20 to about 100 gsm, from about 30 to about 70 gsm, or even from about 40 to about 60 gsm.

The resulting nonwoven webs may be soft, cloth-like, flexible, biodegradable and combinations thereof. Providing the nonwoven webs with the compressed sites of the present invention may result in nonwoven webs which retain good in-use strength, yet that have cloth-like texture that is visible when the webs are pre-moistened. The texture is provided through the application of the compressed sites of the present invention.

### Compressed Sites

The nonwoven webs of the present invention comprise at least one compressed site. To impart compressed sites to the nonwoven web, any method of applying compressive stress to the nonwoven web may be used. Methods of applying compressive stress to the nonwoven web include, but are not limited to, stamping, pressing, cold calender rolling, heated calender rolling and combinations thereof. The compressive stress may smash or compress the fibers with a blunt force, in contrast to other methods of applying stress in which the fibers are sheared or cut with a sharp edge. Without wishing to be bound by theory, it is believed that the blunt force has less impact on the in-use strength of the nonwoven web since it mainly weakens the fibers at the edge of the compressed site, instead of cutting them.

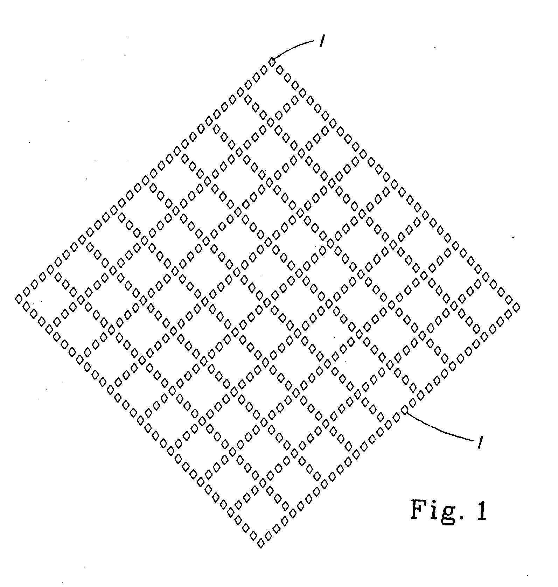

The discrete compressed site(s) may take any shape and may be randomly situated on the nonwoven web or may form a pattern. Non-limiting examples of shapes of compressed sites include diamonds, ellipses, circles, squares, triangles, other polygons, crosses and combinations thereof. Examples of compressed sites 1 and patterns thereof include, but are not limited to, the pattern shown in Fig. 1 as well as variations thereof.

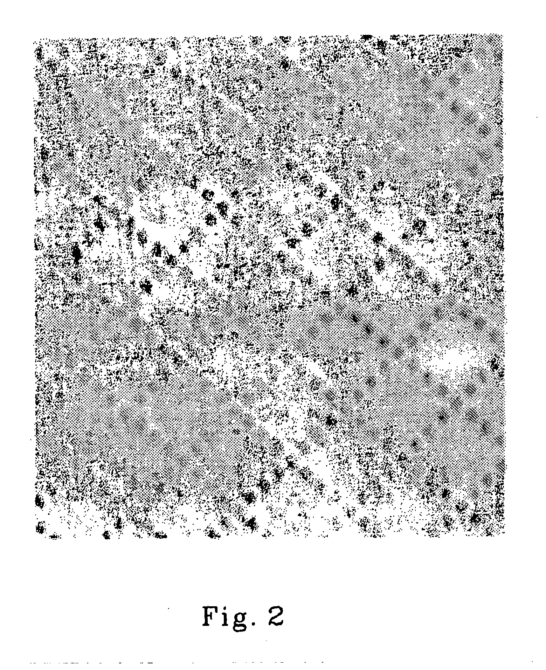

In one example of the present invention, a pre-moistened, wetlaid spunlaced web comprising non-thermoplastic fibers having a fiber length of less than about 15 mm wherein the non-thermoplastic fibers comprise rayon fibers and pulp fibers and from 0% to less than about 5% by weight of the nonwoven web on a dry fiber basis of thermoplastic fibers is provided with a pattern of compressed sites via cold calender rolling and is shown in Fig. 2. The wetlaid spunlaced web is compressed between a smooth calender roller and a patterned calender roller at ambient temperature. The patterned calender roller has a nip pattern similar to that shown in Fig. 1. The total raised surface area of the nips equals about 13 % of the total surface area of the patterned roller. The calendered web acquires compressed sites where it contacts the nips of the patterned roller.

In another example of the present invention, a pre-moistened, wetlaid spunlaced web comprising non-thermoplastic fibers having a fiber length of less than about 15 mm wherein the non-thermoplastic fibers comprise rayon fibers and pulp fibers and from 0% to less than about 5% by weight of the nonwoven web on a dry fiber basis of thermoplastic fibers is provided with a pattern of compressed sites via heated calender rolling. The wetlaid spunlaced web is compressed between a smooth calender roller and a patterned calender roller both of which have internal temperatures below the melting point of any thermoplastic fibers present within the nonwoven web. (i.e., less than about 250°F). The patterned calender roller has a nip pattern similar to that shown in Figure 1. The total raised surface area of the nips equals about 13 % of the total surface area of the patterned roller. The calendered web acquires compressed sites where it contacts the nips of the patterned roller.

In still another example of the present invention, a pre-moistened, wetlaid spunlaced web comprising from about 10% to about 30% by weight of the nonwoven web on a dry fiber basis of rayon fibers and from about 70% to about 90% by weight of the nonwoven web on a dry fiber basis of pulp fibers is provided with a pattern of compressed sites via cold calender rolling. The wetlaid spunlaced web is compressed between a smooth calender roller and a patterned calender roller at ambient temperature. The calendered web acquires compressed sites where it contacts the nips of the patterned roller.

In still yet another example of the present invention, a pre-moistened, wetlaid spunlaced web comprising from about 10% to about 30% by weight of the nonwoven web on a dry fiber basis of rayon fibers and from about 70% to about 90% by weight of the nonwoven web on a dry fiber basis of pulp fibers is provided with a pattern of compressed sites via heated calender rolling. The wetlaid spunlaced web is compressed between a smooth calender roller and a patterned calender roller both of which have internal temperatures below the melting point of any thermoplastic fibers present within the nonwoven web (i.e., less about 250°F). The calendered web acquires compressed sites where it contacts the nips of the patterned roller.

The compressed sites of the present invention comprise un-melted fibers that may provide the perception of a cloth-like texture. The present inventors have surprisingly discovered that the compressed sites remain visible when wet even though the nonwoven webs and/or wipes of the present invention do not contain a sufficient amount of thermoplastic fibers which may melt-bond in the compressed sites. The present inventors have also surprisingly found that the compressed sites remain visible without the need of a material amount of a binder which would chemically bond the fibers in the compressed sites. Thus the wet visibility of the compressed sites of the present invention is accomplished without using methods known in the art which are based upon binding fibers together, such as via the application of chemicals or excess binder, or by melt-bonding thermoplastic fibers.

The compressed sites may be formed by the application of a compressive stress. The compressive stress applied to the substrate is calculated by dividing the total force by the compression area of the patterned roller, as shown in the sample calculation in Table 1, and is based on the assumption that the entire load is transferred though the raised area of the patterned roller. After compression, a silicone based liquid composition is applied to pre-moisten the web, at a ratio of about 3 grams of liquid composition to about 1 gram of dry substrate. As shown in Fig. 2, the compressed sites provide the nonwoven web with a cloth-like texture that is visible when wet.

**Table 1**

| Calendering Compressive Stress Sample Calculation | | | | |
|---|---|---|---|---|
| | English | | Metric | |
| Cylinder Diameter | 4 | [in] | 101.6 | [mm] |
| Total Cylinder Area | 12.6 | [in²] | 8107.3 | [mm²] |
| Cylinder Pressure | 50 | [psi] | 0.34474 | [N/mm²] |
| Cylinder Force | 628 | [lb] | 2794.9 | [N] |
| Number of Cylinders | 2 | | 2 | |
| Total Force | 1257 | [lb] | 5589.8 | [N] |
| Roll Face Width | 16 | [in] | 406.4 | [mm] |
| PLI Loading | 79 | [pli] | 13.8 | [N/mm] |
| Total Raised Surface Area | 13.0% | [%] | 13.0% | [%] |
| Compression Width | 0.0625 | [in] | 1.5875 | [mm] |
| Compression Area | 0.13 | [in²] | 83.9 | [mm²] |
| Compressive Stress | 9666 | [psi] | 67 | [N/mm²] |

As a result of the compressive stress, the fiber density in the compressed sites may be higher as compared to the density of the uncompressed regions of the nonwoven web. Without wishing to be bound by theory, it is believed that when the compressive stress applied to the nonwoven web is at least about 67 N/mm², the compressed sites remain denser than the uncompressed regions even when the nonwoven web is pre-moistened. Consequently, the cloth-like texture provided by the compressed sites is visible when the nonwoven web is wet. In further examples of the present invention, the compressive stress may range from about 67 to about 300 N/mm² and/or from about100 to about 300 N/ mm² and/or from about 67 to about 100 N/mm².

As long as the compressive stress is at least about 67 N/mm², it may be applied to the nonwoven web using any number of different nip patterns. However, in one example of the present invention, the maximum total raised surface area of the nip or nips may be less than about 25%, less than about 20%, less than about 19%, less than about 17% or even less than about 13% of the surface area of the patterned roller. The minimum total raised surface area of the nip or nips may be greater than about 3%.

### Wipes

Wipes may be comprised of nonwoven webs of the present invention. If more than one nonwoven web is incorporated into a wipe, then the wipe will be a multi-ply wipe, with each nonwoven web being a single-ply within the multi-ply wipe. The wipes may be adapted for a variety of uses and may be pre-moistened or moistened with a liquid composition. The liquid composition may comprise an aqueous solution and may further comprise surfactant, co-surfactant, foam building agent, emulsifier, non-cellulosic water soluble organic polymer and mixtures thereof.

The wipes of the present invention may be suitable for use in adult wipes, flushable wipes, cleaning babies, and may also find use in cleaning tasks related to persons of all ages. Such wipes may also include articles used for application of substances to the body, including but not limited to application of make-up, skin conditioners, ointments, medications and mixtures thereof. Such wipes may also include articles used for the cleaning or grooming of pets, and articles used for the general cleansing of surfaces and objects, such as household kitchen and bathroom surfaces, eyeglasses, exercise and athletic equipment, automotive surfaces and the like. Such wipes may also be used in the hospital or clinical environment to clean up bodily fluids and the like.

In some examples of the present invention, the wipes may be strong enough so that their integrity is retained when they are subjected to typical in-use forces, which may range from about 2 Newtons (N) to about 14 N in either the CD or MD. In other words, the wipes of the present invention may exhibit a peak load tensile strength of from about 2 N to about 14 N in either the CD or MD. The strength of the wipes may be determined by measuring their tensile strength; this may be accomplished by cutting samples of wipes into 50 mm wide strips and testing them for tensile strength using EDANA method 20.2-89 in both the cross direction and machine direction. Using this method, the stretching force necessary to cause the integrity of a wipe or a portion of a wipe to fail is measured and is referred to as the wipe's "maximum force." Maximum force is measured in Newtons.

Examples of the wipes of the present invention may have an MD maximum force from about 8 to about 100 N, from about 16 to about 80 N, or even from about 32 to about 64 N. Examples of the wipes of the present invention may have a CD maximum force from about 2 to about 25 N, from about 4 to about 20 N, or even from about 8 to about 16 N. In further examples, the wipes may have an MD or CD force with a numerical value anywhere between these specifically disclosed upper and lower values.

In one example of the present invention the wipes may be "pop-up" wipes, such that when one wipe is pulled from a container such as a tub, an edge of the next wipe in the stack may be presented for easy dispensing. The wipes may be folded and stacked in a container such as a tub. The wipes of the present invention may be folded in any of various known folding patterns, such as C-folding and Z-folding. Use of a Z-fold pattern may enable a folded stack of wipes to be interleaved with overlapping portions. Individual units of wipes may be connected to one another via perforations and/or lines of weakness.

In one example, a wetlaid spunlaced web comprising: (a) from about 20% to about 80% by weight of the wetlaid spunlaced web on a dry fiber basis of rayon fibers and from about 80% to about 20% by weight of the wetlaid spunlaced web on a dry fiber basis of pulp fibers, wherein the rayon fibers have a fiber length of from about 6 mm to less than about 15 mm; (b) a surface; and (c) a plurality of compressed sites comprising un-melted fibers. The compressed sites are located on the surface and are visible when the web is pre-moistened.

The wipes of the present invention may further comprise one or more prints, which may provide aesthetic appeal.

### Nonlimiting Example

A 60 gsm wetlaid spunlaced nonwoven web available from Ahlstrom Corporation, Windsor Locks, CT, comprising about 20% by weight of the nonwoven web on a dry fiber basis of rayon fibers having a fiber length of less than about 12 mm and about 78.5% by weight of the nonwoven web on a dry fiber basis of pulp fibers having a fiber length of less than about 2-3mm and about 1.5% by weight of the nonwoven web on a dry fiber basis of thermoplastic fibers (polyethylene/polypropylene bicomponent fibers) is subjected to a compressive stress at 250°F and ambient room conditions of about 67 N/mm² such that compressed sites that are visible when wet are produced in the nonwoven web. The resulting nonwoven web is shown in Fig. 2.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A nonwoven web comprising non-thermoplastic fibers having a fiber length of less than 15 mm, from less than 0.5% by weight of a binder and from 0% to less than 5% by weight of the nonwoven web on a dry fiber basis of thermoplastic fibers, wherein the nonwoven web exhibits one or more compressed sites comprising at least a portion of one or more of the non-thermoplastic fibers, wherein at least one of the one or more compressed sites is visible when wet.

2. The nonwoven web according to Claim 1 wherein the nonwoven web comprises from 1% to 3% by weight of the nonwoven web on a dry fiber basis of thermoplastic fibers.

3. The nonwoven web according to any of the preceding claims wherein one or more non-thermoplastic fibers have a fiber length of from 3 mm to less than 15 mm.

4. The nonwoven web according to any of the preceding claims wherein the nonwoven web is a wetlaid spunlaced nonwoven web.

5. The nonwoven web according to any of the preceding claims wherein the nonwoven web is an airlaid spunlaced nonwoven web.

6. The nonwoven web according to any of the preceding claims wherein the non-thermoplastic fibers are selected from the group consisting of: regenerated cellulose, pulp, cotton, wool, silk, jute, linen, ramie, hemp, flax, camel hair, kenaf, starch, starch derivative, chitosan, chitosan derivative, hemicellulose, hemicellulose derivative, gum, arabinan, galactan, protein fibers and mixtures thereof.

7. The nonwoven web according to any of the preceding claims wherein the non-thermoplastic fibers comprise from 0% to 100% by weight on a dry fiber basis of regenerated cellulose fibers, preferably wherein the regenerated cellulose fibers comprise rayon fibers selected from the group consisting of: fibrillated rayon, viscose, lyocell fibers and mixtures thereof.

8. The nonwoven web according to any of the preceding claims wherein the non-thermoplastic fibers comprise from 0% to 100% by weight on a dry fiber basis of pulp fibers.

9. The nonwoven web according to any of the preceding claims wherein the nonwoven web further comprises less than 10% by weight of the nonwoven web of binder.

10. The nonwoven web according to any of the preceding claims wherein the nonwoven web exhibits a peak load tensile strength in the CD and/or MD of from 2 N to 14N.

11. A wipe comprising one or more nonwoven webs according to any of the preceding claims.

12. A pre-moistened wipe comprising one or more nonwoven webs according to any of the claims 1 to 10.

13. A method of making a nonwoven web that has at least one compressed site that is visible when wet, wherein the method comprises the steps of: providing at least one nonwoven web comprising non-thermoplastic fibers having a fiber length of from 3 mm to less than 15 mm, from less than 0.5% by weight of a binder and from 0% to less than 5% by weight of the nonwoven web on a dry fiber basis of thermoplastic fibers, and a surface; applying a compressive stress of at least 67 Newtons per square millimeter (N/mm²) to the nonwoven web to create at least one compressed site on the surface of the nonwoven web wherein the at least one compressed site comprises at least a portion of one or more of the non-thermoplastic fibers, wherein the at least one compressed site is visible when wet.

14. The method according to Claim 13 wherein the compressive stress is from 67 to 300 N/mm².

## Patentansprüche

1. Vliesbahn, umfassend nicht thermoplastische Fasern, die eine Faserlänge von weniger als 15 mm aufweisen, zu weniger als 0,5 Gew.-% ein Bindemittel und zu 0 % bis weniger als 5 Gew.-% der Vliesbahn auf einer Fasertrockenbasis Thermoplastfasern, wobei die Vliesbahn eine oder mehrere komprimierte Stellen aufweist, die mindestens einen Teil einer oder mehrerer der nicht thermoplastischen Fasern umfassen, wobei mindestens eine der einen oder mehreren komprimierten Stellen im feuchten Zustand sichtbar ist.

2. Vliesbahn nach Anspruch 1, wobei die Vliesbahn zu 1 Gew.-% bis 3 Gew.-% der Vliesbahn auf einer Fasertrockenbasis Thermoplastfasern umfasst.

3. Vliesbahn nach einem der vorstehenden Ansprüche, wobei eine oder mehrere nicht thermoplastische Fasern eine Faserlänge von 3 mm bis weniger als 15 mm aufweisen.

4. Vliesbahn nach einem der vorstehenden Ansprüche, wobei die Vliesbahn eine nassgelegte wasserstrahlverfestigte Vliesbahn ist.

5. Vliesbahn nach einem der vorstehenden Ansprüche, wobei die Vliesbahn eine luftgelegte wasserstrahlverfestigte Vliesbahn ist.

6. Vliesbahn nach einem der vorstehenden Ansprüche, wobei die nicht thermoplastischen Fasern ausgewählt sind aus der Gruppe bestehend aus: regenerierter Cellulose, Zellstoff, Baumwolle, Wolle, Seide, Jute, Leinen, Ramie, Hanf, Flachs, Kamelhaar, Kenaf, Stärke, Stärkederivat, Chitosan, Chitosanderivat, Hemicellulose, Hemicellulosederivat, Gummi, Arabinan, Galactan, Proteinfasern und Mischungen davon.

7. Vliesbahn nach einem der vorstehenden Ansprüche, wobei die nicht thermoplastischen Fasern zu 0 Gew.-% bis 100 Gew.-% auf einer Fasertrockenbasis regenerierte Cellulosefasern umfassen, wobei die regenerierten Cellulosefasern vorzugsweise Rayonfasern umfassen, die ausgewählt sind aus der Gruppe bestehend aus: fibrilliertem Rayon, Viskose, Lyocell-Fasern und Mischungen davon.

8. Vliesbahn nach einem der vorstehenden Ansprüche, wobei die nicht thermoplastischen Fasern zu 0 Gew.-% bis 100 Gew.-% auf einer Fasertrockenbasis Zellstofffasern umfassen.

9. Vliesbahn nach einem der vorstehenden Ansprüche, wobei die Vliesbahn ferner zu weniger als 10 Gew.-% der Vliesbahn Bindemittel umfasst.

10. Vliesbahn nach einem der vorstehenden Ansprüche, wobei die Vliesbahn eine Zugfestigkeit bei Spitzenbelastung in der Maschinenquerrichtung und/oder der Maschinenlaufrichtung von 2 N bis 14 N aufweist.

11. Wischtuch, umfassend eine oder mehrere Vliesbahnen nach einem der vorstehenden Ansprüche.

12. Vorbefeuchtetes Wischtuch, umfassend eine oder mehrere Vliesbahnen nach einem der Ansprüche 1 bis 10.

13. Verfahren zur Herstellung einer Vliesbahn, die mindestens eine komprimierte Stelle aufweist, die im feuchten Zustand sichtbar ist, wobei das Verfahren die Schritte umfasst: Bereitstellen mindestens einer Vliesbahn, umfassend nicht thermoplastische Fasern, die eine Faserlänge von 3 mm bis weniger als 15 mm aufweisen, zu weniger als 0,5 Gew.-% ein Bindemittel und zu 0 Gew.-% bis weniger als 5 Gew.-% der Vliesbahn auf einer Fasertrockenbasis Thermoplastfasern sowie eine Oberfläche, Anlegen einer Druckbeanspruchung von mindestens 67 Newton pro Quadratmillimeter (N/mm²) an die Vliesbahn, um mindestens eine komprimierte Stelle auf der Oberfläche der Vliesbahn zu schaffen, wobei die mindestens eine komprimierte Stelle mindestens einen Teil einer oder mehrerer der nicht thermoplastischen Fasern umfasst, wobei die mindestens eine komprimierte Stelle im feuchten Zustand sichtbar ist.

14. Verfahren nach Anspruch 13, wobei die Druckbeanspruchung 67 bis 300 N/mm² beträgt.

## Revendications

1. Nappe non tissée comprenant des fibres non thermoplastiques possédant une longueur de fibre inférieure à 15 mm, à partir de moins de 0,5 % en poids d'un liant et de 0 % à moins de 5 % en poids de la nappe non tissée sur une base de fibre sèche de fibres thermoplastiques, où la nappe non tissée présente un ou plusieurs sites comprimés comprenant au moins une partie d'une ou plusieurs des fibres non thermoplastiques, dans laquelle au moins un du ou des sites comprimés est visible à l'état mouillé.

2. Nappe non tissée selon la revendication 1, où la nappe non tissée comprend de 1 % à 3 % en poids de la nappe non tissée sur une base de fibre sèche de fibres thermoplastiques.

3. Nappe non tissée selon l'une quelconque des revendications précédentes, dans laquelle une ou plusieurs fibres non thermoplastiques ont une longueur de fibre allant de 3 mm à moins de 15 mm.

4. Nappe non tissée selon l'une quelconque des revendications précédentes, où la nappe non tissée est une nappe non tissée lacée par filage appliquée par voie humide.

5. Nappe non tissée selon l'une quelconque des revendications précédentes, où la nappe non tissée est une nappe non tissée lacée par filage appliquée par jet d'air.

6. Nappe non tissée selon l'une quelconque des revendications précédentes, dans laquelle les fibres non thermoplastiques sont choisies dans le groupe constitué de : cellulose régénérée, pâte à papier, coton, laine, soie, jute, lin, ramie, chanvre, poils de chameau, ambre jaune, amidon, dérivé d'amidon, chitosan, dérivé de chitosan, hémicellulose, dérivé d'hémicellulose, gomme, arabane, galactane, fibres protéiniques et leurs mélanges.

7. Nappe non tissée selon l'une quelconque des revendications précédentes, dans laquelle les fibres non thermoplastiques comprennent de 0 % à 100 % en poids sur une base de fibre sèche de fibres de cellulose régénérées, de préférence dans laquelle les fibres de cellulose régénérées comprennent des fibres de rayonne choisies dans le groupe constitué de : rayonne fibrillaire, viscose, fibres de lyocell et leurs mélanges.

8. Nappe non tissée selon l'une quelconque des revendications précédentes, dans laquelle les fibres non thermoplastiques comprennent de 0 % à 100 % en poids sur une base de fibre sèche de fibres de pâte à papier.

9. Nappe non tissée selon l'une quelconque des revendications précédentes, où la nappe non tissée comprend en outre moins de 10 % en poids de la nappe non tissée d'un liant.

10. Nappe non tissée selon l'une quelconque des revendications précédentes, où la nappe non tissée présente une résistance à la traction de charge maximale dans le sens travers et/ou le sens machine allant de 2 N à 14 N.

11. Lingette comprenant une ou plusieurs nappes non tissées selon l'une quelconque des revendications précédentes.

12. Lingette préimprégnée comprenant une ou plusieurs nappes non tissées selon l'une quelconque des revendications 1 à 10.

13. Procédé de fabrication d'une nappe non tissée qui a au moins un site comprimé qui est visible à l'état humide, où le procédé comprend les étapes de fourniture d'au moins une nappe non tissée comprenant des fibres non thermoplastiques possédant une longueur de fibre allant de 3 mm à moins de 15 mm, à partir de moins de 0,5 % en poids d'un liant et de 0 % à moins de 5 % en poids de la nappe non tissée sur une base de fibre sèche de fibres thermoplastiques et d'une surface ; d'application d'une contrainte de compression d'au moins 67 Newtons par millimètre carré (N/mm²) à la nappe non tissée de façon à créer au moins un site comprimé sur la surface de la nappe non tissée, dans lequel l'au moins un site comprimé comprend au moins une partie d'une ou plusieurs des fibres non thermoplastiques, dans lequel l'au moins un site comprimé est visible à l'état mouillé.

14. Procédé selon la revendication 13, dans lequel la contrainte de compression va de 67 à 300 N/mm².
